# EUROPEAN PATENT APPLICATION

(11) **EP 4 825 791 A1**
(43) Date of publication of application: **21.10.2026**
(21) Application number: 24904091.6
(22) Date of filing: 28.11.2024
(51) Int. Cl.: C01B 3/04, C21B 13/00, C22B 5/12

(54) **HYDROGEN PRODUCTION SYSTEM**

(30) Priority: 14.12.2023 KR 20230182490
(71) Applicant: POSCO Holdings Inc., Pohang-si, Gyeongsangbuk-do 37859 (KR)
(72) Inventor: Kwon, Gi-Hun, Pohang-si, Gyeongsangbuk-do 37877 (KR); Park, Hai-Woong, Pohang-si, Gyeongsangbuk-do 37877 (KR); Joo, Sang-Wook, Pohang-si, Gyeongsangbuk-do 37877 (KR); Rhee, Chang-Houn, Pohang-si, Gyeongsangbuk-do 37877 (KR); Kim, Beom-Sik, Pohang-si, Gyeongsangbuk-do 37877 (KR)
(74) Representative: Pfenning, Meinig & Partner mbB
(86) International application number: PCT/KR2024/019096
(87) International publication number: WO 2025/127526

(57) **Abstract**

According to exemplary embodiments of the present invention, a hydrogen production system is provided. The present invention comprises: a hydrogen generation unit configured to receive reduced iron from a reduced iron generation unit configured to generate reduced iron by reducing powdered iron ore in a reducing gas atmosphere, and to generate hydrogen from ammonia by bringing the reduced iron into contact with the ammonia; and a regeneration unit configured to receive the reduced iron from the hydrogen generation unit and to regenerate the reduced iron by reducing the reduced iron in a hydrogen gas atmosphere. According to other exemplary embodiments of the present invention, a method for producing hydrogen is provided.

## Description

### Technical Field

The present disclosure relates to a hydrogen production system.

More particularly, the present disclosure relates to a hydrogen production system linked to a steel mill.

### Background Art

Generally, as a technique for storing and transporting hydrogen, a method of compressing or liquefying hydrogen at high pressure has been applied, but recently, a technique of storing and transporting hydrogen using ammonia has been explored and applied, and the technique using ammonia has attracted attention for the efficiency thereof, as compared to a general technique by high pressure or liquefaction.

To use hydrogen stored in ammonia after transporting the hydrogen, a process of decomposing the ammonia back into hydrogen may be necessary. To produce hydrogen by decomposing ammonia, the reaction formula as below may be used.

[Reaction formula 1] 2NH₃ → N₂ + 3H₂ (△H=46 kJ/mol)

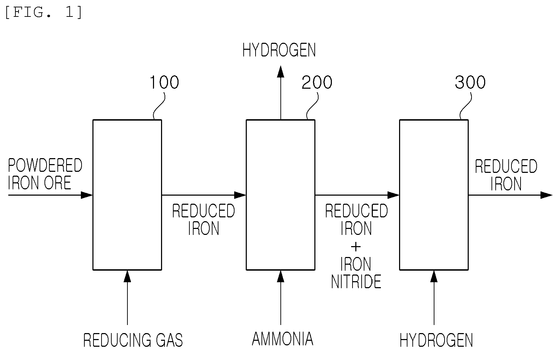

FIG. 1 is a graph indicating thermodynamic equilibrium concentrations of ammonia and hydrogen depending on temperature and pressure. As in FIG. 1, the ammonia decomposition reaction may be an endothermic reaction, and as the temperature increases, the equilibrium conversion rate increases, but as the number of moles of reactants is greater than the number of moles of products, the equilibrium conversion rate may decrease as the pressure increases.

To use hydrogen transported in the form of ammonia, the transported ammonia may need to undergo an ammonia decomposition process at the point of use. In this case, a catalyst and heat energy for ammonia decomposition may be necessary.

Therefore, to reduce energy consumption in the ammonia decomposition reaction, it may be necessary to apply a catalyst operating efficiently, even at low temperature.

Metal catalysts dispersed on metal oxide supports have been extensively studied as a general ammonia decomposition catalyst. FIG. 2 is a graph indicating ammonia decomposition catalyst activity (turnover number). As in FIG. 2, Ru has been known as the most efficient catalyst, and as non-precious metal catalysts, Ni, Co, and Fe may be used.

Meanwhile, in the steel industry, a hydrogen reduction process of converting an iron ore reducing agent from carbon to hydrogen has been developed. To reduce iron ore in the hydrogen reduction process, high-temperature reactions may be necessary, and the reduced iron produced therefrom may have high thermal energy. When using reduced iron as a catalyst for the ammonia decomposition reaction, the energy required for ammonia decomposition may be efficiently supplied, thereby increasing the efficiency of the ammonia decomposition process. However, when using reduced iron as a catalyst for the ammonia decomposition reaction, the surface of reduced iron may be nitrided, such that iron nitride with a FeₓN_{y} structure may be generated, which may be problematic. Thus, the development of technologies to address the aforementioned issue may be necessary.

(Cited document 1) Japanese Laid-Open Patent Publication No. 2011-179089

### Detailed description of present disclosure

### Technical problems to solve

An embodiment of the present disclosure is to provide a hydrogen production system linked to a steelmaking process.

The subject matter of the present disclosure is not limited to the above-described contents. The subject matter of the present disclosure may be understood from the entirety of the contents of this specification, and a person having ordinary skill in the technical field to which the present disclosure belongs may have no difficulty in understanding the additional subject matter of the present disclosure.

### Solution to Problem

According to embodiments of the present disclosure, a hydrogen production system includes a hydrogen generation unit configured to receive reduced iron from a reduced iron generation unit configured to reduce powdered iron ore in a reducing gas atmosphere to produce reduced iron, and to allow the reduced iron to contact ammonia and to produce hydrogen from ammonia; and a regeneration unit configured to receive the reduced iron from the hydrogen generation unit, to perform a reduction treatment on the reduced iron in a hydrogen gas atmosphere, and to regenerate the reduced iron.

The reducing gas includes one of hydrogen, carbon monoxide, and a combination thereof.

The reduced iron generation unit includes one of a fluidized bed reduction reactor, a shaft furnace, and a combination thereof.

Ammonia is supplied to the hydrogen generation unit to contact the reduced iron at a space velocity of 3000 to 9000 h⁻¹.

A temperature of reduced iron supplied to the hydrogen generation unit is 600 to 1000°C.

A size of the reduced iron is 0.5 to 2 mm.

A reduction treatment of the reduced iron is carried out at a temperature equal to or higher than a supply temperature of the reduced iron supplied to the regeneration unit.

The reduced iron supplied to the regeneration unit undergoes the reduction treatment in a hydrogen gas atmosphere at 600°C or higher.

The hydrogen production system is configured such that hydrogen produced by the hydrogen generation unit is partially supplied to the regeneration unit.

According to other embodiments of the present disclosure, preparing reduced iron by reducing powdered iron ore using a fluidized bed reduction reactor, a shaft furnace, or a combination thereof; generating hydrogen through an ammonia decomposition reaction by providing ammonia to the reduced iron and; and performing a reduction treatment on the reduced iron by providing hydrogen gas to the reduced iron after the ammonia decomposition reaction.

Hydrogen produced by the ammonia decomposition reaction is partially provided in the reduction treatment of the reduced iron.

In the generating hydrogen, a temperature of the reduced iron is 600 to 1000°C.

A size of the reduced iron is 0.5 to 2 mm.

The reduction treatment of the reduced iron is performed at a temperature equal to or higher than the reduced iron temperature immediately after the ammonia decomposition reaction.

The reduction treatment of the reduced iron is performed at a temperature of 600°C or higher. Advantageous Effects of Invention

According to an aspect of the present disclosure, a hydrogen production system linked to a steelmaking process may be provided.

The various beneficial advantages and effects of the present disclosure are not limited to the above-described contents, and will be more easily understood in the process of describing the specific embodiments of the present disclosure.

### Brief Description of Drawings

FIG. 1 is a diagram illustrating a hydrogen production system according to embodiments.

### Best Mode for Invention

Hereinafter, preferable embodiments of the present disclosure will be described in detail with reference to the attached drawings. Prior to this, it should be noted that terms and words used in this specification and claims should not be construed as being limited to general or dictionary definitions thereof. To describe the inventions in the best manner, the terms should be construed with meanings and concepts consistent with the technical spirit of the present disclosure based on the principle that inventors may appropriately define the concepts of terms.

Hereinafter, when describing with reference to the drawings, identical or corresponding components will be assigned the same reference numerals, and redundant descriptions thereof will not be provided.

In the embodiments below, terms such as "first," "second," or the like, are not used in a limiting sense, and to distinguish one component from another.

In the embodiments, an expression used in the singular encompasses the expression of the plural, unless it has a clearly different meaning in the context.

In the embodiments, terms such as "include" or "have" imply the presence of features or components described in the specification, and do not exclude the possibility of one or more other features or components to be added.

In the drawings, components may be exaggerated or reduced in size for ease of description. For example, the size and thickness of each component in the drawings are arbitrarily for ease of description, and the present disclosure is not necessarily limited to the illustrated elements.

When an embodiment may be implemented differently, a specific process order may be performed differently from the described order. For example, two processes described in sequence may be performed substantially simultaneously or in the reverse order of the described order.

Also, when describing the present disclosure, when a detailed description of a related known component or function is deemed to obscure the gist of the present disclosure, the detailed description thereof will not be provided.

FIG. 1 is a diagram illustrating a hydrogen production system (10) according to embodiments.

Referring to FIG. 1, the hydrogen production system (10) according to embodiments may include a reduced iron generation unit (100), a hydrogen generation unit (200), and a regeneration unit (300).

As described above, the hydrogen production system (10) may use reduced iron to produce hydrogen. Iron (Fe) may have lower CO₂ emissions (GWP, global warming potential) required for mining and extraction as compared to other metal elements which may be used as catalysts for ammonia decomposition reaction. Accordingly, by directly using iron used in a steelmaking process as an ammonia decomposition reaction catalyst, carbon dioxide emissions generated during a separate ammonia decomposition catalyst manufacturing process may be substantially reduced. Also, as iron is less expensive than other metal elements which may be used as an ammonia decomposition catalyst, the unit cost of hydrogen production during the catalyst manufacturing process may be lowered, which may be advantageous from an economic perspective.

According to embodiments, the reduced iron generation unit (100) may be configured to reduce powdered iron ore in a reducing gas atmosphere to produce reduced iron.

The operating conditions of the reduced iron generation unit (100) are not particularly limited as long as powdered iron ore reduction may be performed. As a non-limiting example, the reduced iron generation unit (100) may operate within a pressure range of 2 to 8 barg and a temperature range of 500 to 1000°C. More specifically, the reduced iron generation unit (100) may operate within a temperature range of 700 to 1000°C.

The reduced iron generation unit (100) may include one of a fluidized bed reduction reactor, a shaft furnace, and a combination thereof. The fluidized bed reduction reactor may feed and transport powdered iron ore within the furnace, may form a fluidized bed of powdered iron ore, and may supply reducing gas to the fluidized bed of powdered iron ore, thereby reducing powdered iron ore. A reducing gas may be supplied from a lower portion of the fluidized bed reduction reactor. The shaft furnace may be configured to transport powdered iron ore in pellet form, supplied to an upper portion of the furnace, to a lower portion of the furnace. The reducing gas may be supplied to contact the powdered iron ore countercurrently with respect to a direction of movement of powdered iron ore. The fluidized bed reduction reactor and the shaft furnace may omit a coke process of a general iron making process, thereby significantly reducing carbon dioxide emissions as compared to a general iron making process.

As a non-limiting example, the reduced iron generation unit (100) may include a plurality of fluidized bed reduction reactors connected to each other in series. In this case, powdered iron ore may be fed and transported to each of the plurality of fluidized bed reduction reactors, and may go through a reduction treatment. The reducing gas supplied to the fluidized bed reduction reactor, disposed on the rear end with respect to the feeding and transport direction of powdered iron ore, may be collected in an upper portion of the fluidized bed reduction reactor and may be supplied to the fluidized bed reduction reactor disposed on the front end. Accordingly, the reduction efficiency of the powdered iron ore may be further improved.

The reducing gas may include one of hydrogen, carbon monoxide, and a combination thereof. From a carbon dioxide emission perspective, the reducing gas may preferably include hydrogen only.

The hydrogen generation unit (200) may be configured to generate hydrogen by thermally decomposing ammonia on a catalyst. More specifically, the hydrogen generation unit (200) may be configured to generate hydrogen from ammonia by contacting reduced iron generated by the reduced iron generation unit (100) with ammonia. The generated hydrogen may flow to an upper portion of the hydrogen generation unit (200). In the upper portion of the hydrogen generation unit (200), the generated hydrogen and also the nitrogen decomposed from ammonia may be distributed. That is, a mixed gas including hydrogen, nitrogen, and un-decomposed ammonia may be distributed in the upper portion of the hydrogen generation unit (200). According to embodiments, hydrogen may be separated and purified from a mixed gas by one of a membrane separation method, a pressure swing adsorption (PSA) method, a thermal swing adsorption (TSA) method, a vacuum swing adsorption (VSA) method, and a combination thereof. More specifically, hydrogen may be separated and purified by a pressure swing adsorption (PSA) method.

As a non-limiting example, the hydrogen generation unit (200) may be a fluidized bed reactor having a fluidized bed of reduced iron formed therein. In this case, ammonia may be supplied to the hydrogen generation unit (200) to contact the fluidized bed of reduced iron. To this end, ammonia may be supplied to one of an upper portion, a lower portion, and both upper and lower portions of the hydrogen generation unit (200).

The hydrogen generation unit (200) may receive reduced iron from the reduced iron generation unit (100). As the reduced iron generation unit (100) reduces powdered iron ore under high-temperature conditions, reduced iron provided from the reduced iron generation unit (100) may include heat energy corresponding to the high temperature. By using reduced iron as a catalyst for the ammonia decomposition reaction, heat energy required for the ammonia decomposition reaction may be supplied. Accordingly, the hydrogen generation unit (200) may perform the ammonia decomposition reaction using autothermal energy of the reduced iron without heating the catalyst for the ammonia decomposition reaction, thereby improving the energy efficiency of the hydrogen production system (10).

The average internal temperature of the hydrogen generation unit (200) may be 600 to 900°C. More specifically, the average internal temperature of the hydrogen generation unit (200) may be 600 to 850°C. The average internal temperature of the hydrogen generation unit (200) may be 600 to 700°C. The average internal temperature of the hydrogen generation unit (200) may be determined by reduced iron supplied to the hydrogen generation unit (200). Since reduced iron has high thermal conductivity, the internal region of the hydrogen generation unit (200) may be heated by sensible heat of reduced iron. As a non-limiting example, the average internal temperature of the hydrogen generation unit (200) may be equal to or lower than the temperature of reduced iron supplied to the hydrogen generation unit (200). More specifically, the average internal temperature of the hydrogen generation unit (200) may be substantially the same as the temperature of reduced iron supplied to the hydrogen generation unit (200).

According to embodiments, the temperature of the reduced iron supplied to the hydrogen generation unit (200) may be 600 to 1000°C. More specifically, the temperature of the reduced iron supplied to the hydrogen generation unit (200) may be 600 to 900°C. The temperature of the reduced iron supplied to the hydrogen generation unit (200) may be 650 to 900°C. The temperature of the reduced iron supplied to the hydrogen generation unit (200) may be 650 to 850°C.

When the temperature of the reduced iron supplied to the hydrogen generation unit (200) is lower than 600°C, heat energy required for the ammonia decomposition reaction may not be sufficiently supplied, such that the ammonia decomposition efficiency may be degraded. When the temperature of the reduced iron supplied to the hydrogen generation unit (200) exceeds 1,000°C, the ammonia decomposition rate may not increase significantly as compared to the excessive heat energy supplied to the hydrogen generation unit (200), such that the heat supply efficiency for ammonia decomposition may be reduced. Also, the structure and properties of the iron may change at a temperature of the Curie temperature (1,043°C) of iron or higher, such that it may be difficult to control quality in a subsequent process.

According to embodiments, the size of the reduced iron may be 0.5 to 2 mm. More specifically, the size of the reduced iron may be 0.5 to 1 mm. The size of the reduced iron may be 1 to 2 mm. The size of the reduced iron was measured based on a major axis thereof.

When the size of the reduced iron exceeds 2 mm, the contact efficiency between ammonia and the reduced iron may decrease, such that the ammonia decomposition efficiency may deteriorate. Accordingly, the ammonia decomposition efficiency may be improved as the size of the reduced iron decreases. However, when the size of the reduced iron is less than 0.5 mm, the specific surface area of the reduced iron may increase excessively, such that the surface may be oxidized or nitrided. Also, small particle sizes may hinder gas flow within the reactor, which may cause pressure differentials, such that the ammonia decomposition efficiency may be reduced.

According to embodiments, the ammonia may be supplied to the hydrogen generation unit (200) to contact the reduced iron at a space velocity of 3,000 to 9,000 h⁻¹. The ammonia may be supplied to the hydrogen generation unit (200) to contact the reduced iron at a space velocity of 3,000 to 8,000 h⁻¹. The ammonia may be supplied to the hydrogen generation unit (200) to contact the reduced iron at a space velocity of 3000 to 6000 h⁻¹.

When the space velocity of ammonia exceeds 9000 h⁻¹, the volumetric flow rate of ammonia to be processed per unit volume of reduced iron charged in the hydrogen generation unit (200) may excessively increase. In this case, the ammonia decomposition efficiency (conversion rate) may be excessively reduced. As the space velocity of ammonia decreases, the ammonia decomposition efficiency may improve. However, when the space velocity of ammonia is less than 3000 h⁻¹, excessively large amounts of reduced iron may be required per unit volume of ammonia.

Ammonia may be provided to the hydrogen generation unit (200) in the form of ammonia gas. The composition of the ammonia gas is not particularly limited as long as the ammonia gas may produce hydrogen by causing an ammonia decomposition reaction on the reduced iron catalyst.

When the reduced iron is used as a catalyst for the ammonia decomposition reaction, the reduced iron may be nitrided, such that iron nitride in the form of FeₓN_{y} may be formed on the surface of the reduced iron. Iron nitride in the form of FeₓN_{y} is an impurity which may be formed by nitriding of the reduced iron during the ammonia decomposition reaction. As a non-limiting example, the iron nitride may be one or more of Fe₄N, Fe₃N, and Fe₂N. Due to iron nitride, the quality of products produced in subsequent processes using the reduced iron as a raw material may be degraded. Accordingly, to recycle the reduced iron used in the hydrogen generation unit (200) in the steelmaking process, the iron nitride may need to be removed.

According to embodiments, the regeneration unit (300) may be configured to receive reduced iron from the hydrogen generation unit (200), to perform a reduction treatment on the reduced iron in a hydrogen gas atmosphere, and to regenerate the reduced iron. Accordingly, the iron nitride formed on the reduced iron may be removed and the reduced iron may be recycled. The regenerated reduced iron may be circulated to the hydrogen generation unit (200). The regenerated reduced iron may be used as a raw material for steel sheet, and may be provided in an electric furnace process of a steelmaking process or a steelmaking process.

According to embodiments, the reduction treatment of the reduced iron may be performed at a temperature equal to or higher than a supply temperature of the reduced iron supplied to the regeneration unit (300). That is, the reduction treatment of the reduced iron may be performed at a temperature substantially equal to or higher than the supply temperature of the reduced iron supplied to the regeneration unit (300). As a non-limiting example, the reduced iron supplied to the regeneration unit (300) may go through the reduction treatment in a hydrogen gas atmosphere at 600°C or higher. The reduced iron supplied to the regeneration unit (300) may go through the reduction treatment in a hydrogen gas atmosphere at 700°C or higher. The reduced iron supplied to the regeneration unit (300) may go through the reduction treatment in a hydrogen gas atmosphere at 800°C or higher. The reduced iron supplied to the regeneration unit (300) may go through the reduction treatment in a hydrogen gas atmosphere at 1,000°C or lower. When the reduction treatment temperature of the reduced iron exceeds 1,000°C, the structure and properties of the iron may change. Accordingly, when using the reduced iron provided from the regeneration unit (300), it may be difficult to control quality of a product. When the reduction treatment temperature of the reduced iron is lower than the supply temperature of the reduced iron to the regeneration unit (300), the regeneration efficiency of the reduced iron may be deteriorated.

The hydrogen gas used for the reduction treatment may be derived from the hydrogen generation unit (200). According to embodiments, the hydrogen production system (10) may be configured such that a hydrogen generated by the hydrogen generation unit (200) may be partially supplied to the regeneration unit (300). To this end, the hydrogen generation unit (200) and the regeneration unit (300) may be fluidly connected to each other for hydrogen provided to the regeneration unit (300). More specifically, an upper portion of the hydrogen generation unit (200), in which hydrogen is captured, and the regeneration unit (300) may be connected to each other through a fluid connection means, such as an air duct. As described above, the hydrogen production system (10) may independently supply atmospheric gas for the reduction treatment of the reduced iron within the system, thereby improving the reduction treatment efficiency of the hydrogen production system (10). The proportion of hydrogen provided to the regeneration unit (300) based on hydrogen generated by the hydrogen generation unit (200) is not particularly limited as long as the regeneration unit (300) may perform the reduction treatment of the reduced iron.

### [Method of producing hydrogen]

According to embodiments, the method of producing hydrogen may include preparing reduced iron, generating hydrogen, and regenerating reduced iron.

The preparing reduced iron may include preparing reduced iron by reducing powdered iron ore using one of a fluidized bed reduction reactor, a shaft furnace, or a combination thereof. As the fluidized bed reduction reactor and the shaft furnace reduce powdered iron ore in a high-temperature environment, the reduced iron, a product of reduction treatment of powdered iron ore, may include heat energy corresponding to the high temperature. The reduced iron may be used as a catalyst for the ammonia decomposition reaction, thereby improving the energy efficiency of the hydrogen production process.

According to embodiments, the reducing gas may be one of hydrogen, carbon monoxide, or a combination thereof.

The generating hydrogen may include providing ammonia to the reduced iron and producing hydrogen through an ammonia decomposition reaction. In this case, the temperature of the reduced iron may be 600 to 1000°C. The size of the reduced iron may be 0.5 to 2 mm. Ammonia may be provided to contact the reduced iron at a space velocity of 3000 to 9000 h⁻¹. Accordingly, ammonia may be thermally decomposed, such that hydrogen may be produced. The generated hydrogen may be separated and purified by one of membrane separation, pressure swing adsorption (PSA), thermal swing adsorption (TSA), vacuum swing adsorption (VSA), and combinations thereof. More specifically, the generated hydrogen may be separated and purified by pressure swing adsorption (PSA).

The regenerating reduced iron may include providing hydrogen gas to the reduced iron after the ammonia decomposition reaction and performing a reduction treatment on the reduced iron. Accordingly, by removing iron nitride in the form of the FeₓN_{y} formed on the surface of the reduced iron during the ammonia decomposition process, the reduced iron may be regenerated. The regenerated reduced iron may be recycled as an ammonia decomposition catalyst. Alternatively, the regenerated reduced iron may be supplied to a steel process and may be used as a raw material for steel materials (steel sheet).

The reduction treatment of the reduced iron may be performed at a temperature equal to or higher than the temperature of the reduced iron immediately after the ammonia decomposition reaction. According to embodiments, the reduction treatment of the reduced iron may be performed at a temperature of 600°C or higher.

In the regenerating reduced iron, as for the hydrogen gas used as the atmosphere gas for the reduction treatment, hydrogen generated from the generating hydrogen may be used. That is, hydrogen produced by the ammonia decomposition reaction may be partially supplied to the reduction treatment of the reduced iron.

The elements substantially overlapping those of the hydrogen production system described above may be also applied to the hydrogen production method, and thus, the detailed description may not be provided.

### Mode for Invention

Hereinafter, embodiments of the present disclosure will be described in detail for those skilled in the art to easily implement the present disclosure. However, the present disclosure may be implemented in various different forms and is not limited to the embodiments described herein.

### Experimental example 1: Confirmation of ammonia decomposition efficiency by reduced iron size

Reduced iron and ammonia were supplied to a reactor having an average internal temperature substantially equal to the reduced iron temperature under the same conditions as in in Table 1, and ammonia decomposition efficiency was confirmed.

Ammonia decomposition efficiency was confirmed by measuring the ammonia decomposition using a mass spectrometer while injecting ammonia under each reduced iron temperature condition for the embodiment and each comparative example. The ammonia decomposition reaction pressure was controlled at 7 barg equally.

**[Table 1]**

| Classification | Reduced iron temperature (°C) | Reduced iron size (mm) | Ammonia decomposition efficiency (%) |
|---|---|---|---|
| Embodiment 1 | 800 | 1 to 2 | 91.5 |
| Comparative example 1 | 700 | 2.8 to 3.4 | 43.1 |
| Comparative example 2 | 700 | 3.4 to 4.0 | 37.9 |
| Comparative example 3 | 800 | 2.8 to 3.4 | 83.0 |
| Comparative example 4 | 800 | 3.4 to 4.0 | 77.8 |

Referring to Table 1, embodiment 1, which had a small reduced iron size, had the highest ammonia decomposition efficiency. However, the poor ammonia decomposition efficiencies of comparative examples 1 to 4, which had relatively large reduced iron sizes, were relatively deteriorated.

### Experimental example 2: confirmation of ammonia decomposition efficiency by ammonia space velocity

Ammonia decomposition efficiency was confirmed by supplying reduced iron and ammonia to a fluidized bed reactor at an average internal temperature of 700°C under the conditions as in Table 2. Also, the reduced iron temperature was controlled at approximately 700°C. The internal pressure of the fluidized bed reactor was controlled at 7 barg.

Ammonia decomposition efficiency was measured at the same reduced iron size as in Embodiment 1, and the reaction temperature was controlled at 700°C equally, such that the ammonia decomposition rate was measured and confirmed depending on a space velocity.

**[Table 2]**

| Classification | Space velocity (h⁻¹) | Ammonia decomposition efficiency (%) |
|---|---|---|
| Embodiment 2 | 5000 | 90.7 |
| Comparative example 5 | 10000 | 69.4 |
| Comparative example 6 | 20000 | 59.7 |
| Comparative example 7 | 40000 | 50.1 |

Referring to Table 2, embodiment 2, of which the space velocity satisfied the range suggested by the present disclosure, exhibited the highest ammonia decomposition efficiency. However, comparative examples 5 and 7 were out of the range suggested by the present disclosure, such that the ammonia decomposition efficiency was deteriorated sharply.

### Experimental example 3: confirmation of regeneration of reduced iron

The presence of iron nitride was confirmed for the reduced iron before the ammonia decomposition reaction, after the ammonia decomposition reaction, and after the reduction treatment, and the results are listed in Table 3. As for the reduced iron before the ammonia decomposition reaction, reduced iron generated by the reduced iron generation unit was used. As for the reduced iron after the ammonia decomposition reaction, reduced iron obtained by contacting the reduced iron before the ammonia decomposition reaction with ammonia in the hydrogen generation unit at approximately 600°C was used. As for the reduced iron after the reduction treatment, reduced iron after the ammonia decomposition reaction, having gone through the reduction treatment in a hydrogen gas atmosphere at approximately 800°C, was used.

Iron nitride was measured using XRD analysis, and the intensity (arbitrary unit, a.u.) of each crystal was quantified and analyzed for comparison.

**[Table 3]**

| Classification | Fe₃N+Fe₂N(a.u.) | Fe₄N(a.u.) |
|---|---|---|
| Reduced iron before decomposition | 0 | 0 |
| Reduced iron after decomposition | 317 | 58 |
| Reduced iron after reduction treatment | 0 | 12 |

Referring to Table 3, it was confirmed that iron nitride was formed on the surface of reduced iron by the ammonia decomposition reaction, but that by performing the reduction treatment in a hydrogen gas atmosphere, the iron nitride was effectively removed.

The present disclosure has been described in greater detail through drawings and embodiments. However, the configurations described in the drawings or embodiments described in this specification are merely embodiments of the present disclosure and do not fully represent the technical concepts of the present disclosure. Therefore, it should be understood that various equivalents and modifications may be present as of the time of this application.

### [DESCRIPTION OF REFERENCE CHARACTERS]

10: HYDROGEN PRODUCTION SYSTEM
100: REDUCED IRON GENERATION UNIT
200: HYDROGEN GENERATION UNIT
300: REGENERATION UNIT

## Claims

1. A hydrogen production system, comprising:
a hydrogen generation unit configured to receive reduced iron from a reduced iron generation unit configured to reduce powdered iron ore in a reducing gas atmosphere to produce reduced iron, and to allow the reduced iron to contact ammonia and to produce hydrogen from ammonia; and
a regeneration unit configured to receive the reduced iron from the hydrogen generation unit, to perform a reduction treatment on the reduced iron in a hydrogen gas atmosphere, and to regenerate the reduced iron.

2. The hydrogen production system of claim 1, wherein the reducing gas includes one of hydrogen, carbon monoxide, and a combination thereof.

3. The hydrogen production system of claim 1, wherein the reduced iron generation unit includes one of a fluidized bed reduction reactor, a shaft furnace, and a combination thereof.

4. The hydrogen production system of claim 1, wherein ammonia is supplied to the hydrogen generation unit to contact the reduced iron at a space velocity of 3000 to 9000 h-1.

5. The hydrogen production system of claim 1, wherein a temperature of reduced iron supplied to the hydrogen generation unit is 600 to 1000°C.

6. The hydrogen production system of claim 1, wherein a size of the reduced iron is 0.5 to 2 mm.

7. The hydrogen production system of claim 1, wherein the reduction treatment of the reduced iron is carried out at a temperature equal to or higher than a supply temperature of the reduced iron supplied to the regeneration unit.

8. The hydrogen production system of claim 7, wherein the reduced iron supplied to the regeneration unit undergoes the reduction treatment in a hydrogen gas atmosphere at 600°C or higher.

9. The hydrogen production system of claim 1, wherein the hydrogen production system is configured such that hydrogen produced by the hydrogen generation unit is partially supplied to the regeneration unit.

10. A method of producing hydrogen, the method comprising:
preparing reduced iron by reducing powdered iron ore using a fluidized bed reduction reactor, a shaft furnace, or a combination thereof;
generating hydrogen through an ammonia decomposition reaction by providing ammonia to the reduced iron and; and
performing a reduction treatment on the reduced iron by providing hydrogen gas to the reduced iron after the ammonia decomposition reaction.

11. The hydrogen production system of claim 10, wherein hydrogen produced by the ammonia decomposition reaction is partially provided in the reduction treatment of the reduced iron.

12. The hydrogen production system of claim 10, wherein, in the generating hydrogen, a temperature of the reduced iron is 600 to 1000°C.

13. The hydrogen production system of claim 10, wherein a size of the reduced iron is 0.5 to 2 mm.

14. The hydrogen production system of claim 10, wherein the reduction treatment of the reduced iron is performed at a temperature equal to or higher than the reduced iron temperature immediately after the ammonia decomposition reaction.

15. The hydrogen production system of claim 14, wherein the reduction treatment of the reduced iron is performed at a temperature of 600°C or higher.
